# EUROPÄISCHE PATENTSCHRIFT

(11) **EP 2 166 634 B1**
(45) Veröffentlichungstag und Bekanntmachung des Hinweises auf die Patenterteilung: **15.01.2014**
(21) Anmeldenummer: 09011202.0
(22) Anmeldetag: 01.09.2009
(51) Int. Cl.: H02G 3/38, H02G 3/04

(54) **Befestigungsvorrichtung für Trockenbauwandkanäle**
Fastening device for dry, mortar-less wall channels
Dispositif de fixation pour canaux muraux de la construction à sec

(30) Priorität: 19.09.2008 DE 202008012477 U
(43) Veröffentlichungstag der Anmeldung: 24.03.2010
(73) Patentinhaber: Tehalit GmbH, 67716 Heltersberg (DE)
(72) Erfinder: Schnurr, Richard, 66957 Vinningen (DE); Broschart, Peter, 67715 Geiselberg (DE)
(74) Vertreter: Nuss, Laurent

(56) Entgegenhaltungen:
- EP-A1- 1 207 606
- EP-A1- 1 703 609

## Beschreibung

Die vorliegende Erfindung betrifft eine Befestigungsvorrichtung für Trockenbauwandkanäle gemäß dem Oberbegriff des Anspruchs 1.

Eine Trockenbauwand ist mit Gipskartonplatten beplankt und besteht aus einer Reihe von Bodenschienen, Deckenschienen und senkrecht verlaufenden C-Schienen. Solche Trockenbauwände benötigen Kupplungselemente, damit eine Befestigung an den C-Schienen erfolgen kann. Man vergleiche beispielsweise die EP 1 207 606 A, EP 1 207 605 A und EP 1 207 607 A. Nachteilig bei diesen Systemen ist, dass die Montage der Kanalelemente sehr aufwändig und wenig flexibel ist. Die darin beschriebenen Kabelkanäle sind allseitig geschlossen. Dies ist unbefriedigend.

Eine weitere Lösung ist in der EP 1 703 609 A beschrieben. Hierbei werden keine geschlossenen Kabelkanalelemente verwendet, sondern parallele Seitenprofilleisten, welche Deckelhalteprofile besitzen, auf die entsprechende Kanaldeckel, aber auch Geräteinbaudosen oder Elektroinstallationsgeräte aufgerastet werden können. Auf die Seitenprofilleisten werden U-förmige Profilhalter aufgerastet, welche sich in jeder beliebigen Höhe an den senkrechten C-Schienen befestigen lassen. Dadurch kann ein flexibles Elektroinstallations- oder Kanalsystem geschaffen werden, welches mit verhältnismäßig geringem Aufwand in Trockenbauwände integriert werden kann.

Nachteilig bei all diesen System ist jedoch, dass bei erforderlichen Änderungs- oder Reparaturarbeiten an den Trockenbauwänden eine vollständige Demontage und anschließende Neumontage der Installationselemente der Trockenbauwand erfolgen muss, was zeitaufwändig und arbeitsintensiv ist. So werden z. B. die Kupplungs- und Befestigungselemente mit den C-Schienen verrastet oder verklinscht.

Es ist Aufgabe der vorliegenden Erfindung, eine Befestigungsvorrichtung für Trockenbauwandkanäle anzugeben, die eine schnelle Montage ohne Befestigung an C-Schienen ermöglicht.

Diese Aufgabe wird gelöst durch eine Befestigungsvorrichtung mit den Merkmalen des Anspruchs 1 und einen Trockenbauwandkanal gemäß Anspruch 8.

Ein Vorteil der erfindungsgemäßen Befestigungsvorrichtung liegt darin, dass diese die Montage eines Trockenbauwandkanals ohne eine Verbindung mit den senkrechten C-Schienen ermöglicht. Dies wird mittels einer an der Unterseite der Befestigungsvorrichtung angebrachten Grundplatte erreicht, deren beiden Seitenschenkel seitlich über den Grundkörper der Befestigungsvorrichtung herausragen und sich von hinten gegen die Beplankungen der Gipskartonplatten abstützen können. Das Einklemmen der erfindungsgemäß geformten Seitenschenkel der Grundplatte hinter die Beplankungen ist für einen sicheren und festen Halt der Seitenprofilleisten mit den Deckelhalteprofilen völlig ausreichend. Eine zusätzliche Montage oder Befestigung an den C-Schienen mit Befestigungsmitteln ist zwar möglich, aber für den Halt nicht erforderlich.

Der eigentliche Kanal wird durch die beiden parallelen Seitenprofilleisten gebildet, welche auf die Beplankungen der Gipskartonplatten gelegt werden. Auf die Deckelhalteprofile der Seitenprofilleisten werden, wie bei Trockenbauwandkanälen üblich, ein Kanaldeckel und/oder ein Elektroinstallationsgerät aufgerastet.

In einer bevorzugten Ausführungsform befindet sich an den beiden Seitenschenkeln der Grundplatte der Befestigungsvorrichtung zur zusätzlichen Befestigung der Beplankungen jeweils eine oder mehrere Quernasen. Diese sorgen für zusätzlichen Halt.

Die Befestigungsvorrichtung selbst besteht aus zwei Sockelprofilen, in denen formgenaue Aufnahmen für die korrespondierenden Deckelhalteprofile der Seitenprofile eingearbeitet sind. Die beiden seitlichen Sockelprofile sind über einen Steg miteinander verbunden. Zur Verrastung bzw. Verklemmung der Befestigungsvorrichtung mit den Seitenprofilleisten befinden sich in den Aufnahmen Gleitschuhe mit vorzugsweise nach unten abgewinkelten Gleitschrägen. Die Gleitschuhe sind vorzugsweise federnd ausgebildet.

Zur Sicherung der in dem Leitungskanal verlaufenden Kabel und Leitungen befinden sich an den Innenseiten der Sockelprofile vorzugsweise Kämme.

In einer weiteren Ausführungsform befinden sich an den oberen Außenkanten der Sockelprofile nach unten abgewinkelte Haken, welche eine optionale Befestigungsmöglichkeit mit den Beplankungen ermöglichen.

Zur Verrastung der Deckelhalteprofile der Seitenprofile sind in den Aufnahmen der Sockelprofile zusätzliche Fächer neben den Gleitschuhen eingearbeitet.

Die Erfindung wird in den Zeichnungen näher erläutert.

### Es zeigen

- Fig. 1: eine isometrische Darstellung der erfindungsgemäßen Befestigungsvorrichtung,
- Fig. 2: die Befestigungsvorrichtung in Montageposition an seitlichen Beplankungen,
- Fig. 3: einen Querschnitt eines erfindungsgemäßen Trockenbaukanals.

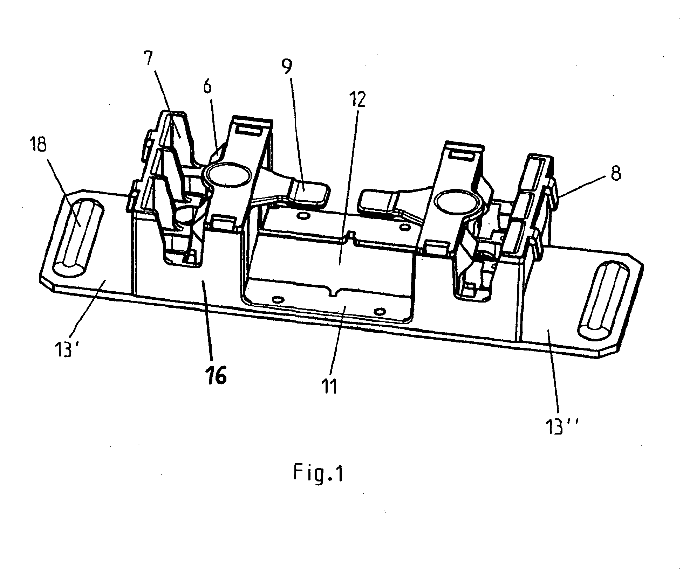

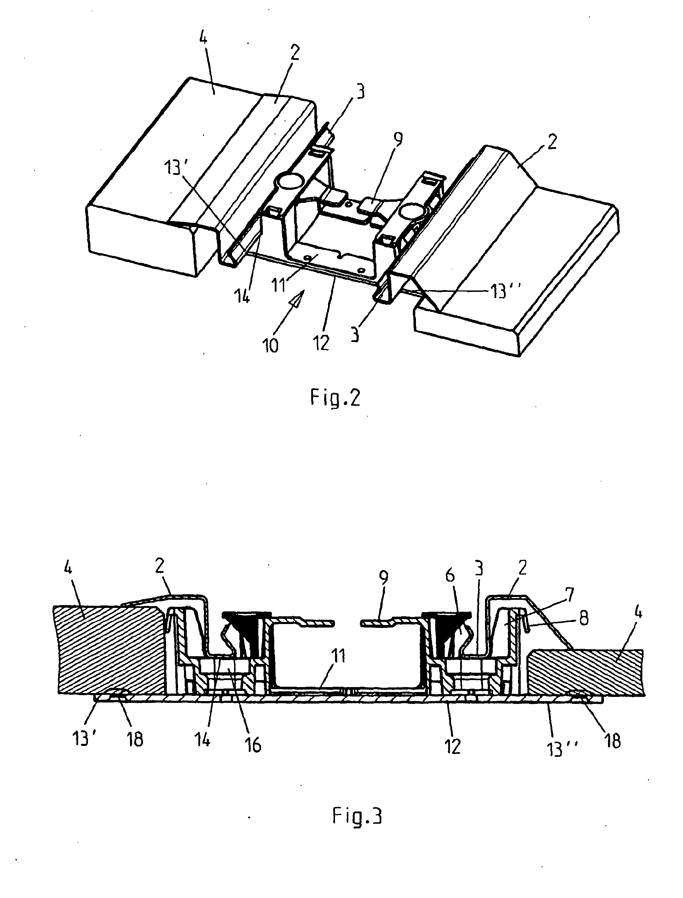

In Fig. 1 erkennt man die erfindungsgemäße Befestigungsvorrichtung, bestehend aus einem Grundkörper 10 und zwei seitlichen Sockelprofilen 16, welche über einen Steg 11 miteinander verbunden sind. Der Grundkörper 10 ist in der gezeigten Ausführungsform mit der Grundplatte 12 verschraubt oder verrastet. In den Sockelprofilen 16 sind Aufnahmen 14 ausgebildet, in denen sich seitlich ausgeformte Gleitschuhe 6 mit Gleitschrägen sowie einzelne Fächer 7 befinden. In die Aufnahmen 14 werden die Deckelhalteprofile 3 der Seitenprofile 2 des Trockenbauwandkanals aufgerastet (siehe Fig. 3). Hierfür sind die Gleitschuhe 6 vorzugsweise federnd ausgestaltet.

An der Außenkante der Sockelprofile 16 erkennt man ferner nach unten abgewinkelte Haken 8, welche eine zusätzliche Befestigungsmöglichkeit bieten.

Zur Sicherung der Kabel und Leitungen im Leitungskanal sind zwischen den Sockelprofilen 16 Kämme 9 vorgesehen.

An den Enden der Seitenschenkel 13', 13" der Grundplatte 12 befinden sich nach oben ausgeformte Quernasen 18, welche zusätzlichen Halt für die Beplankungen bieten.

In Fig. 2 erkennt man die erfindungsgemäße Befestigungsvorrichtung in Montageposition. Die Schenkel 13', 13" sind unter die Beplankungen 4 des Trockenbauwandkanals geklemmt. Auf den Beplankungen 4 liegen die beiden Seitenprofile 2 auf. Die Deckelhalteprofile 3 der beiden Seitenprofile 2 sind in die Aufnahmen 14 eingesteckt und über die Gleitschuhe 6 verrastet.

In Fig. 3 erkennt man im Querschnitt die Gleitschuhe 6 in den Aufnahmen 14 der Sockelprofile 16. Die Deckelhalteprofile 3 der Seitenprofile 2 stützen sich gegen die Gleitschuhe 6 sowie die Fächer 7 ab.

An der oberen Außenkante des Sockelprofils 16 erkennt man die Haken 8. Die Grundplatte 12 greift mit den beiden Seitenschenkeln 13' und 13" von unten gegen die Beplankungen 4. Beide Sockelprofile 16 sind mit einem im Leitungskanal angeordneten Steg 11 miteinander verbunden.

Die erfindungsgemäße Befestigungsvorrichtung hat den Vorteil, dass die Verbindungen zwischen den Seitenprofilen 2 und der Befestigungsvorrichtung selbst leicht lösbar sind. Ferner sind auch die Verbindungen zwischen der Befestigungsvorrichtung und den Beplankungen 4 leicht lösbar. Dadurch sind Änderungs- und Demontagearbeiten an der Trockenbauwand einfach und schnell durchführbar.

## Patentansprüche

1. Befestigungsvorrichtung für Trockenbauwandkanäle, umfassend
- einen Grundkörper (10) mit zwei seitlichen Sockelprofilen (16) mit darin eingebrachten Aufnahmen (14) für Deckelhalteprofile (3) von Seitenprofilen (2) eines Trockenbauwandkanals,
- einen im Leitungskanal angeordneten Steg (11), der die beiden Sockelprofile (16) miteinander verbindet,
- in den Aufnahmen (14) für die Deckelhalteprofile (3) sind federnde Gleitschuhe (6) ausgebildet,
**gekennzeichnet durch** das Merkmal:
- an der Unterseite des Grundkörpers (10) befindet sich eine Grundplatte (12) mit zwei seitlich herausragenden Seitenschenkeln (13', 13"), welche hinter die Beplankungen (4) eines Trockenbauwandkanals klemmbar sind.

2. Befestigungsvorrichtung nach Anspruch 1, **gekennzeichnet durch** das Merkmal:
- an den Seitenschenkeln (13', 13") der Grundplatte (12) sind zwei Quernasen (18) ausgeformt.

3. Befestigungsvorrichtung nach Anspruch 1 oder 2, **gekennzeichnet durch** das Merkmal:
- die Grundplatte (12) ist mit dem Grundkörper (10) verschraubt oder verrastet.

4. Befestigungsvorrichtung nach einem der Ansprüche 1 bis 3, **gekennzeichnet durch** das Merkmal:
- im Leitungskanal des Grundkörpers (10) befinden sich gegenüberliegend angeordnete Kämme (9).

5. Befestigungsvorrichtung nach einem der Ansprüche 1 bis 4, **gekennzeichnet durch** das Merkmal:
- an der oberen Außenkante der Sockelprofile (16) befinden sich nach unten abgewinkelte Haken (8).

6. Befestigungsvorrichtung nach einem der Ansprüche 1 bis 5, **gekennzeichnet durch** das Merkmal:
- in den Aufnahmen (14) für die Deckelhalteprofile (3) befinden sich Fächer (7).

7. Befestigungsvorrichtung nach einem der Ansprüche 1 bis 6, **gekennzeichnet durch** das Merkmal:
- die Grundplatte (12) ist an eine C-Schiene eines Trockenbauwandkanals montierbar.

8. Trockenbauwandkanal, umfassend eine Befestigungsvorrichtung nach einem der Ansprüche 1 bis 7.

## Claims

1. Fastening device for drywall ducts, comprising
- a basic body (10), having two lateral base profiles (16) with mounts (14) introduced therein for cover-retaining profiles (3) of side profiles (2) of a drywall duct,
- a crosspiece (11), which is arranged in the line-guiding duct and connects the two base profiles (16) to one another,
- resilient sliding blocks (6), formed in the mounts (14) for the cover-retaining profiles (3),
**characterized by** the following feature:
- the basic body (10) has located on its underside a baseplate (12) with two laterally projecting side limbs (13', 13"), which can be clamped behind the covering panels (4) of a drywall duct.

2. Fastening device according to Claim 1, **characterized by** the following feature:
- two transverse protuberances (18) are formed on the side limbs (13', 13'') of the baseplate (12).

3. Fastening device according to Claim 1 or 2, **characterized by** the following feature:
- the baseplate (12) is screwed or latched to the basic body (10).

4. Fastening device according to one of Claims 1 to 3, **characterized by** the following feature:
- lugs (9) are arranged opposite one another in the line-guiding duct of the basic body (10).

5. Fastening device according to one of Claims 1 to 4, **characterized by** the following feature:
- downwardly angled hooks (8) are located on the upper outer edge of the base profiles (16).

6. Fastening device according to one of Claims 1 to 5, **characterized by** the following feature:
- compartments (7) are located in the mounts (14) for the cover-retaining profiles (3).

7. Fastening device according to one of Claims 1 to 6, **characterized by** the following feature:
- the baseplate (12) can be mounted on a C-shaped rail of a drywall duct.

8. Drywall duct comprising a fastening device according to one of Claims 1 to 7.

## Revendications

1. Dispositif de fixation pour des gaines murales pour cloisons sèches, comprenant
- un corps de base (10) avec deux profiles de socle latéraux (16) dans lesquels sont ménagés des logements (14) pour des profilés de maintien de couvercle (3) de profilés latéraux (2) d'une gaine murale pour cloisons sèches,
- une entretoise (11) disposée dans le caniveau, qui relie entre eux les deux profilés de socle (16),
- des patins glissants à ressort (6) sont formés dans les logements (14) pour les profilés de maintien de couvercle (3),
**caractérisé par** la caractéristique suivante :
- une plaque de base (12) se trouve sur le dessous du corps de base (10), pourvue de deux branches latérales (13', 13") latéralement saillantes, qui peuvent être serrées derrière les parements (4) d'une gaine murale pour cloisons sèches.

2. Dispositif de fixation selon la revendication 1, **caractérisé par** la caractéristique suivante :
- deux ergots transversaux (18) sont formés sur les branches latérales (13', 13") de la plaque de base (12).

3. Dispositif de fixation selon la revendication 1 ou 2, **caractérisé par** la caractéristique suivante :
- la plaque de base (12) est assemblée au corps de base (10) par vissage ou par enclenchement.

4. Dispositif de fixation selon l'une des revendications 1 à 3, **caractérisé par** la caractéristique suivante :
- des pattes (9) disposées en vis-à-vis se trouvent dans le caniveau du corps de base (10).

5. Dispositif de fixation selon l'une des revendications 1 à 4, **caractérisé par** la caractéristique suivante :
- des crochets (8) recourbés vers le bas se trouvent sur le bord extérieur supérieur des profilés de socle (16).

6. Dispositif de fixation selon l'une des revendications 1 à 5, **caractérisé par** la caractéristique suivante :
- des travées (7) se trouvent dans les logements (14) pour les profilés de maintien de couvercle (3).

7. Dispositif de fixation selon l'une des revendications 1 à 6, **caractérisé par** la caractéristique suivante :
- la plaque de base (12) peut être montée sur un profilé en C d'une gaine murale pour cloisons sèches.

8. Gaine murale pour cloisons sèches, comprenant un dispositif de fixation selon l'une des revendications 1 à 7.
